(19) Europäisches Patentamt
European Patent Office
Office européen des brevets

(11) **EP 3 866 648 B1**

(12) **FASCICULE DE BREVET EUROPEEN**

(45) Date de publication et mention de la délivrance du brevet:
**09.10.2024  Bulletin 2024/41**

(21) Numéro de dépôt: **19786365.7**

(22) Date de dépôt: **17.10.2019**

(51) Classification Internationale des Brevets (IPC):
***A47G 19/22*** *(2006.01)*

(52) Classification Coopérative des Brevets (CPC):
**A47G 19/2233**

(86) Numéro de dépôt international:
**PCT/EP2019/078293**

(87) Numéro de publication internationale:
**WO 2020/079193 (23.04.2020 Gazette 2020/17)**

(54) **RECIPIENT A ACTION EFFERVESCENTE**

BEHÄLTER MIT BRAUSEWIRKUNG

CONTAINER WITH EFFERVESCENT ACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.10.2018  FR 1859699**

(43) Date de publication de la demande:
**25.08.2021  Bulletin 2021/34**

(73) Titulaire: **Arc France**
**62510 Arques (FR)**

(72) Inventeurs:
• **DEBOUT, Emilie**
**62510 Arques (FR)**
• **MARQUANT, Ludovic**
**62510 Arques (FR)**
• **DESGARDIN, Christophe**
**62510 Arques (FR)**
• **GARNIER, Yvan**
**62510 Arques (FR)**
• **DONZE, Sébastien**
**62510 Arques (FR)**

(74) Mandataire: **Cabinet Netter**
**36, avenue Hoche**
**75008 Paris (FR)**

(56) Documents cités:
EP-A1- 0 703 743       EP-A1- 2 823 736
EP-B1- 0 703 743       WO-A1-2010/048488
DE-B3- 102006 048 997  FR-A1- 3 008 295
FR-A1- 3 065 360       US-A1- 2010 104 697

## Description

L'invention relève du domaine des récipients pour liquide, et plus particulièrement des articles de gobeleterie.

Lors de la fabrication de récipients pour boissons tels que des gobelets en verre, les surfaces créées sont généralement rendues les plus lisses possibles, notamment pour leur conférer une bonne transparence et pour des raisons esthétiques.

Le service d'une boisson gazeuse dans un récipient génère des phénomènes effervescents, ou du bullage, et l'accumulation de mousse à la surface. Pour le service de la bière ou du vin mousseux par exemple, il est souhaitable de générer et d'entretenir de l'effervescence. Les zones de genèse des bulles dans un verre sont appelées sites de nucléation.

Il a été constaté que la présence d'irrégularités dans les surfaces de récipient au contact de boisson gazeuse favorise l'apparition de bulles à partir du gaz dissous dans ladite boisson gazeuse. Pour favoriser le bullage, des surfaces intérieures présentant un relief rugueux ont donc été créées dans des contenants. Lors du remplissage du contenant avec un liquide carbonaté tel qu'une boisson gazeuse, des anfractuosités de la surface intérieure emprisonnent des poches d'air. Les interfaces entre le liquide et les poches d'air permettent de meilleurs échanges gazeux. Les anfractuosités forment alors des zones de nucléation.

Le brevet européen EP 0 703 743 décrit un procédé d'apport de matière sur une surface pour créer des sites de nucléation et améliorer le bullage. Il a été parfois constaté un brunissement du fond du verre. La demande de brevet FR 2 531 891 décrit un procédé d'ablation de matière favorisant l'apparition de zone de dégagement gazeux. Des exemples d'application sont donnés dans la demande WO 2010/048488.

Le brevet FR 3 008 295 propose de créer des sites de nucléation à l'intérieur d'un récipient pour boisson par des irrégularités de surface dans une région choisie du récipient sur laquelle on dépose ensuite une couche hydrophobe sur la région choisie.

La demande FR n°1753464 sera publiée le 21 octobre 2018 postérieurement à la date de dépôt de la présente.

La Demanderesse a identifié le besoin d'améliorer encore la qualité du bullage afin de satisfaire des marchés plus larges avec des types de bière à faible taux d'alcool et/ou à faible taux de gaz carbonique dissous. La qualité du bullage englobe la constance du bullage et donc la reproductibilité de la fabrication du récipient. Une fabrication aisée a été recherchée.

Le Pr. Liger-Belair et son équipe de l'UMR CNRS 7331 - Université de Reims Champagne-Ardenne ont publié sur l'effervescence :

Liger-Belair, G. "The physics behind the fizz in champagne and sparkling wines" European Physical Journal: Spécial Topics 201, 1-88, 2012.

Liger-Belair, G. "La physique des bulles de champagne" Annales de Physique (Paris) 27 (4), 1-106, 2002.

Liger-Belair, G.; Conreux, A.; Villaume, S.; Cilindre, C. "Monitoring the losses of dissolved carbon dioxide from laser-etched champagne glasses" Food Research International, 54, 516-522, 2013.

Liger-Belair, G.; Voisin, C.; Jeandet, P. "Modeling non-classical heterogeneous bubble nucléation from cellulose fibers: Application to bubbling in carbonated beverages" Journal of Physical Chemistry B 109, 14573-14580, 2005.

Liger-Belair, G.; Parmentier, M.; Jeandet, P. "Modeling the kinetics of bubble nucléation in champagne and carbonated beverages" Journal of Physical Chemistry B 110, 21145-21151, 2006.

Liger-Belair, G. "How many bubbles in your glass of bubbly?" Journal of Physical Chemistry B 118, 3156-3163, 2014.

Liger-Belair, G.; Bourget, M.; Villaume, S.; Jeandet, P.; Pron, H.; Polidori, G. "On the losses of dissolved CO2 during champagne serving" Journal of Agricultural and Food Chemistry 58, 8768-8775, 2010.

Il est souhaitable de disposer d'un récipient de consommation de bière assurant une libération de bulles satisfaisante pour un grand nombre de types de bière qu'il pourrait contenir, et stable au cours des utilisations du récipient, que le récipient soit sec, ou humide, notamment en sortie de lave-verres ou lors d'un second remplissage, avec obtention d'un bullage équivalent, et d'une fabrication reproductible et robuste pour assurer les qualités précitées du récipient avec une faible variabilité et une faible sensibilité aux petites variations lors de la production.

L'invention vient améliorer la situation, notamment par rapport aux deux derniers brevets précités de la Demanderesse.

La Demanderesse propose un contenant à boisson gazeuse, notamment verre, comprenant une paroi étanche réalisée en au moins un matériau structurel définissant une surface interne destinée à recevoir de la boisson. Ladite surface interne comprend une région munie d'un revêtement hydrophobe comprenant un siloxane polymérisé. Une pluralité d'évidements sont ménagés dans ledit revêtement hydrophobe. Lesdits évidements sont non débouchants de la paroi étanche.

Lesdits évidements peuvent être traversants ou non traversants du revêtement hydrophobe en fonction de l'épaisseur dudit revêtement hydrophobe.

Les évidements forment des sites de nucléation. La tenue au lavage est excellente, notamment supérieure à 500 cycles en lave-verres, avec conservation du bullage sur récipient sec ou humide. Les bulles sont générées sur les sites de nucléation et libérées. Le phénomène de rétention de bulles observé par la Demanderesse dans certains contenants antérieurs est évité. Le revêtement hydrophobe repose sur le matériau structurel. Le récipient est dépourvu d'email dans la zone de bullage.

La technique ablative mise en oeuvre évite un réchauffage du verre, d'où une production rapide et économe en énergie.

La gravure après le dépôt du revêtement hydrophobe, correspondant en termes de structure à des perforations traversant ou non le revêtement hydrophobe, permet d'augmenter la tolérance d'épaisseur du revêtement hydrophobe, tout en étant neutre sur l'étape de gravure, et de bénéficier de perforations présentant des bords plus nets, en d'autres termes avec des rayons de raccordement plus petits entre la surface supérieure du revêtement hydrophobe et la surface latérale de la perforation. Ceci est favorable au bullage. La fabrication industrielle est facilitée. Le dépôt du revêtement hydrophobe peut être réalisé de manière plus économique.

Par ailleurs, les techniques plasma sont de mise en oeuvre industrielle lourde. On peut ici s'en passer.

Dans un mode de réalisation, le revêtement hydrophobe couvre de 10 à 75 % de la région en surface.

Dans un mode de réalisation, le revêtement hydrophobe forme des plots dans la région.

Dans un mode de réalisation, le revêtement hydrophobe forme des zones distantes les unes des autres. Les zones peuvent être de forme approximativement circulaire.

Dans un mode de réalisation, le revêtement hydrophobe présente une épaisseur variant de plus de 0 à 250 $\mu$m d'une zone à une autre zone dudit revêtement. Le revêtement hydrophobe peut être monocouche. De préférence, l'épaisseur varie de plus de 0 à 100 $\mu$m.

Dans un mode de réalisation, le revêtement hydrophobe présente au moins une première partie d'épaisseur comprise entre 20 et 100 $\mu$m, et au moins une deuxième partie d'épaisseur comprise entre 0,2 et 5 $\mu$m.

Dans un mode de réalisation, le polysiloxane est pourvu d'un radical méthyl, préférablement est un polyméthylsiloxane, notamment un SILRES® HK46.

Dans un mode de réalisation, le polysiloxane est pourvu d'un radical méthyl et d'un radical phényl, préférablement est un polyméthylphénylsiloxane, notamment un SILBIONE® 76405.

Dans un mode de réalisation, le revêtement hydrophobe présente un angle de contact avec l'eau supérieur ou égal à 60°, préférablement supérieur ou égal à 100°. L'hydrophobie est ici considérée au sens large à partir de 60°.

Dans un mode de réalisation, le revêtement hydrophobe est apte au contact alimentaire.

Dans un mode de réalisation, le revêtement hydrophobe présente, hors des évidements, une surface extérieure sensiblement plane.

Dans un mode de réalisation, les évidements présentent une distance inter évidements comprise entre 150 et 550 $\mu$m. Une fusion du matériau structurel est évitée.

Dans un mode de réalisation, les évidements présentent une largeur comprise entre 50 et 350 $\mu$m. Ladite largeur est un diamètre en cas d'évidements circulaires.

Dans un mode de réalisation, lesdits évidements sont des trous disposés selon un motif régulier. Les trous sont borgnes.

L'invention vise aussi un procédé pour créer des sites de nucléation à l'intérieur d'un récipient pour boisson et favoriser la formation de bulles au contact d'une boisson gazeuse, dans lequel une région est munie d'au moins un revêtement hydrophobe discontinu comprenant un siloxane polymérisé, le récipient comprenant une paroi étanche réalisé en au moins un matériau structurel définissant une surface interne destinée à recevoir de la boisson, ladite surface interne comprenant ladite région, et des évidements sont ménagés dans le revêtement hydrophobe, lesdits évidements étant non débouchants de la paroi étanche et étant, préférablement, traversants du revêtement hydrophobe.

Dans un mode de réalisation, ledit revêtement hydrophobe est déposé par tampographie puis traité thermiquement.

Dans un mode de réalisation, lesdits évidements sont ménagés par des tirs laser de fréquence comprise entre 1 et 20 kHz, préférablement entre 5 et 15 kHz, de puissance comprise entre 20 et 150 W, préférablement entre 60 et 120 W, de durée comprise entre 0,1 et 3 s, préférablement entre 0,5 et 3 s.

Dans un mode de réalisation, lesdits évidements sont ménagés par des tirs laser de fréquence comprise entre 5 et 15 kHz.

Dans un mode de réalisation, lesdits évidements sont ménagés par des tirs laser de puissance comprise entre 60 et 120 W.

Dans un mode de réalisation, lesdits évidements sont ménagés par des tirs laser de durée comprise entre 0,5 et 3 s.

Dans un mode de réalisation, le récipient est réalisé en verre sodo-calcique.

Dans un mode de réalisation, le récipient est réalisé en cristallin. Le cristallin comprend une somme de PbO, BaO, $K_2O$ et ZnO supérieure ou égale à 10% en masse, présente une densité d > 2,45 et un indice de réfraction $n_d \geq 1,52$.

Le récipient peut en outre comprendre un corps en verre. La transparence permet de visualiser l'apparition et le cheminement des bulles depuis le site de nucléation jusqu'à la surface de la boisson.

D'autres caractéristiques, détails et avantages de l'invention apparaîtront à la lecture de la description détaillée ci-après, et des dessins annexés, sur lesquels :

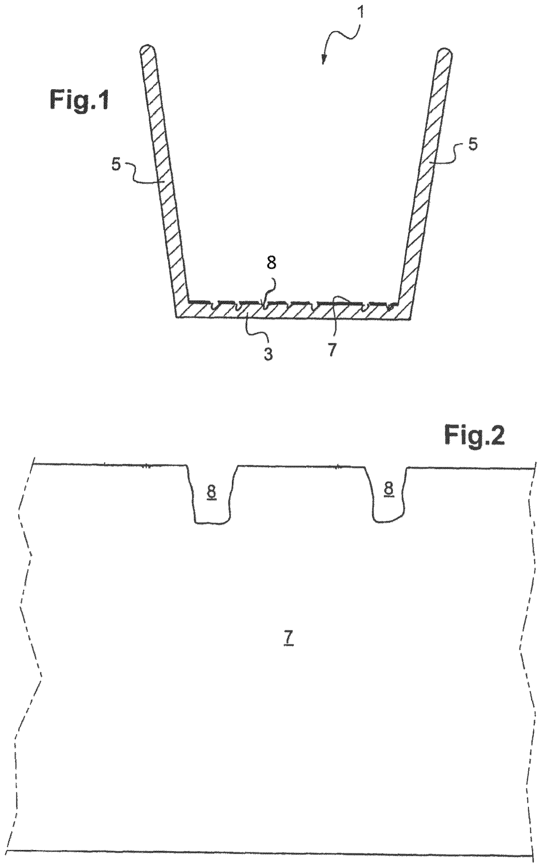

- la figure 1 est une vue en coupe d'un contenant,

- la figure 2 est une vue de détail de la figure 1,

- la figure 3 est une vue similaire à la figure 1 en présence d'une boisson gazeuse,

- la figure 4 est une vue de dessus à fort grossissement de la surface intérieure du fond du contenant, et

- la figure 5 est une photographie comparative d'un mode de l'invention et d'un verre non revêtu.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans un liquide alimentaire, le dioxyde de carbone ($CO_2$) dissous en phase liquide est le gaz vecteur du phénomène d'effervescence. La fréquence d'émission des bulles lors d'une dégustation, le grossissement des bulles dans le contenant et le nombre de bulles susceptibles de se former sont reliés à un certain nombre de paramètres physico-chimiques de la phase liquide et du contenant dans lequel on déguste.

Lorsqu'un gaz est mis en contact avec un liquide, une partie de ce gaz se dissout dans le liquide. Différents facteurs influencent la solubilité du gaz dans le liquide, en particulier la température et la pression. A l'équilibre, il existe une proportionnalité entre la concentration dans la phase liquide d'une espèce chimique i, notée $c_i$, et sa pression partielle en phase gazeuse $P_i$. La loi de Henry s'écrit :

$$c_i = k_H\, P_i \qquad [1]$$

La constante de proportionnalité $k_H$ s'appelle la constante de Henry. Elle dépend fortement du gaz et du liquide considérés, ainsi que de la température.

Sous la pression atmosphérique normale $P_o \approx 1$ bar, compte tenu de la solubilité du $CO_2$ dans une bière à 4 °C qui vaut $k_H \approx 2,6$ g/L/bar, ladite bière est susceptible de dissoudre environ 2,6 g/L de $CO_2$.

Lorsqu'une substance chimique i est à l'équilibre de part et d'autre d'une interface gaz/liquide, sa concentration dans le liquide vérifie la loi de Henry. On dit alors que le liquide est saturé vis-à-vis de cette substance. En l'occurrence, saturation signifie équilibre.

Lorsque la concentration $c_L$ en une substance chimique i dans un liquide est supérieure à ce qui est prévu par la loi de Henry, le liquide est sursaturé vis-à-vis de cette substance. Pour quantifier cette situation hors équilibre, on définit le coefficient de sursaturation Si comme l'excès relatif de concentration dans un liquide en une substance i par rapport à la concentration de référence, notée $c_0$ (choisie comme la concentration d'équilibre de cette substance sous une pression partielle égale à la pression qui règne dans le liquide $P_L$). On définit donc le coefficient de sursaturation Si sous la forme suivante :

$$S_i = (c_i - c_0)/c_0 \qquad [2]$$

Lorsqu'un liquide est sursaturé vis-à-vis d'une substance chimique, on a $S_i > 0$. Le liquide évacue une partie de son contenu en cette substance chimique pour retrouver un nouvel état d'équilibre qui vérifie la loi de Henry.

En conditions de dégustation, dans un contenant, la pression qui règne dans le liquide est quasiment identique à la pression ambiante. Compte tenu de la faible hauteur de liquide qui n'excède pas 20 à 25 cm, l'effet de la surpression hydrostatique qui règne au fond du contenant est négligeable par rapport à la pression atmosphérique. A une température de 4 °C, on peut alors en déduire la concentration à l'équilibre comme étant égale à :

$$c_0 = k_H P_L \approx k_H P_0 \approx 2,6 \text{ g/L} \qquad [3]$$

Les bières ne disposent pas toutes de la même concentration en $CO_2$ dissous. Certaines sont faiblement chargées à hauteur de 3-4 g/L, alors que d'autres sont fortement chargées, jusqu'à 7-8 g/L. Leurs coefficients de sursaturation respectifs vis-à-vis du $CO_2$ dissous ne seront donc pas les mêmes. Dans le cas d'une bière moyenne, chargée à environ 5 g/L. Son coefficient de sursaturation (à 4 °C) en appliquant l'équation [2] :

$$S_{CO2} = (c_i - c_0)/c_0 \approx (5-2,6)/2,6 \approx 0,9 \qquad [4]$$

Pour comparaison (toujours à 4 °C), les eaux fortement gazeuses (de type Badoit Rouge) présentent des coefficients de sursaturation de l'ordre de 1,3, alors que les vins de Champagne (encore jeunes) présentent des coefficients nettement plus élevés, de l'ordre de 3,4. D'une manière générale, plus le coefficient de sursaturation d'un liquide chargé en $CO_2$ dissous est élevé, plus la cinétique d'échappement du gaz carbonique dissous qui en résulte sera intense afin de rétablir l'équilibre de Henry. Cependant, il a été observé que la sursaturation d'un liquide en gaz dissous n'est pas nécessairement synonyme de formation de bulles et donc d'effervescence.

En effet, aux valeurs de sursaturation des bières, la formation de bulles nécessite la présence de poches de gaz dans le milieu, dont le rayon de courbure rc dépasse une valeur dite critique définie comme suit :

$$r_C = 2\,\gamma/P_o S \qquad [5]$$

où y est la tension de surface du liquide, $P_o$ est la pression ambiante et S est le coefficient de sursaturation de la phase liquide en $CO_2$.

A la pression atmosphérique normale de 1 bar et à 4 °C, dans le cas d'une bière dont la tension de surface vaut typiquement 45 mN/m et le coefficient de sursaturation environ 0,9, l'équation précédente fait apparaître un rayon critique de l'ordre de 1 μm en dessous duquel la formation de bulles n'a pas lieu.

Pour faire apparaître et grossir des bulles de $CO_2$ dans une bière, le milieu contient en son sein des microbulles de gaz dont les rayons sont supérieurs à ce rayon critique de l'ordre de 1 μm. On parle de nucléation hétérogène non-classique (par opposition aux nucléations dites classiques qui concernent la formation spontanée, ex nihilo, de bulles dans un liquide fortement sursaturé). Les nucléations classiques requièrent des coefficients de sursaturation en gaz dissous très importants (>100), incompatibles avec les boissons gazeuses.

La question se pose alors de l'origine des germes gazeux qui sont les catalyseurs de l'effervescence dans un contenant.

La Demanderesse a observé in situ, le mode d'apparition des bulles de bières servies dans des verres lisses n'ayant donc pas subi de traitement particulier. Dans la grande majorité des cas, ce sont des poches d'air piégées dans des particules adsorbées à la surface du verre qui jouent le rôle de site de nucléation. Le rayon de ces poches de gaz piégées au coeur des particules (le plus souvent des fibres de cellulose) dépasse en général le rayon critique requis pour permettre la diffusion du $CO_2$ dissous et donc la production répétitive de bulles dans le verre.

Le rayon critique de nucléation tient compte de la concentration de la bière en $CO_2$ dissous, cf. équations [4] et [5]. Or, après le service, ladite concentration n'est plus la même que la concentration initiale. Le service est une étape critique. En effet, le versement dans le contenant génère d'importantes turbulences qui accélèrent l'échappement du gaz carbonique dissous. Plus la bière est froide, plus le gaz carbonique dissous est conservé dissous au moment du service. En effet, la bière est d'autant plus visqueuse qu'elle est froide. Or, la vitesse de diffusion du $CO_2$ dissous hors de la bière est d'autant plus rapide que la viscosité de la bière est faible. De plus, les turbulences du versement s'atténuent d'autant plus efficacement que la bière est visqueuse. En conséquence, plus la bière est servie froide, meilleure est la conservation du gaz carbonique dissous pendant le service.

- Pour la bière St Orner, servie à 4 °C, dans un verre lisse, on trouve des rayons critiques de 1,02 ± 0,02 μm.

- Pour la bière Carlsberg, servie à 4 °C, dans un verre lisse, on trouve un rayon critique de 1,05 ± 0,02 μm.

Par ailleurs, il a été établi que le flux de bulles, c'est-à-dire le nombre de bulles par seconde est proportionnel au carré de la température, à la concentration en $CO_2$ dissous dans le liquide, et inversement proportionnel à la viscosité dynamique du liquide (en kg/m/s).

Sur un contenant, selon un mode de réalisation, rempli de bière, il a été constaté une hauteur de mousse sensiblement conservée que le contenant soit sec à température ambiante ou humide à température de sortie de lave-verre. Le bullage non libéré est très faible.

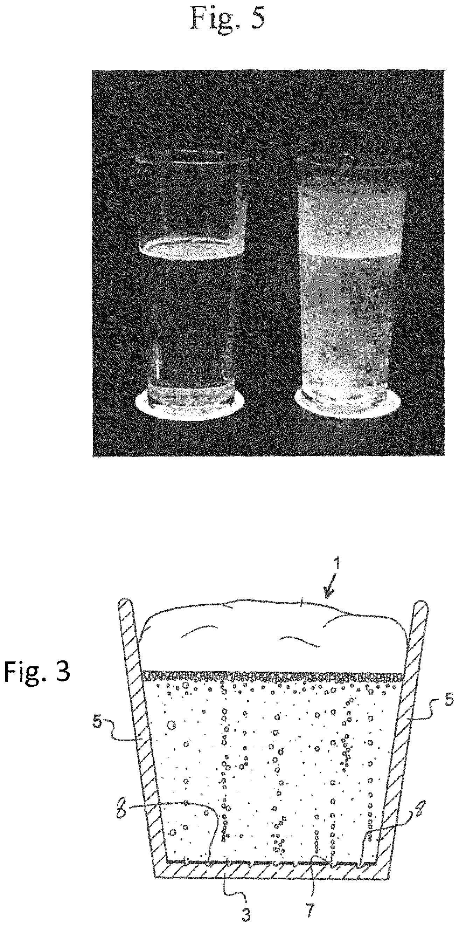

Un tel contenant 1 est représenté sur les figures. Le contenant 1 prend, ici, la forme d'un verre à boire. Dans des variantes, le contenant 1 prend la forme d'une chope à bière, d'une flûte à champagne, ou tout autre contenant adapté pour accueillir une boisson gazeuse. Le procédé décrit dans la suite s'applique à la plupart des récipients pour boisson gazeuse pour lesquels la maîtrise de l'effervescence présente un intérêt, voir figure 3.

Le contenant 1 est, ici, constitué d'un fond 3 sensiblement plan et d'une paroi 5 latérale de forme sensiblement tronconique. Le contenant 1 est, ici, axisymétrique. Dans l'exemple décrit ici, le fond 3 et la paroi 5 forment un corps monobloc. Le corps présente une surface intérieure de fond et une surface intérieure de bord. Le corps est étanche. Les surfaces intérieures sont destinées à être au contact de la boisson lors de l'utilisation du contenant 1.

Le contenant 1 peut être obtenu par des techniques de fabrication connues en tant que telles, par exemple par pressage, soufflage et/ou par centrifugation. En sortie de telles techniques de fabrication, l'intérieur du contenant 1 est sensiblement lisse et uniforme. Le contenant 1 est dit brut.

Le contenant 1 brut est revêtu. Un revêtement discontinu est appliqué à la surface supérieure du fond 3 située du côté de la paroi 5, c'est-à-dire la surface intérieure de fond. Le revêtement discontinu appliqué à la surface supérieure du fond 3 située du côté de la paroi 5 est un revêtement hydrophobe 7.

Le revêtement hydrophobe 7 recouvre partiellement le fond 3. Le revêtement hydrophobe 7 peut être disposé en taches distantes les unes des autres. Le revêtement hydrophobe 7 peut être disposé en plots distants les uns des autres. Le revêtement hydrophobe couvre de 10 à 75 % de la région en surface. La paroi 5 est brute. Plus généralement, la paroi 5 est dépourvue de couche hydrophobe.

Le revêtement hydrophobe 7 forme des zones séparées. Les zones sont distantes les unes des autres.

Le revêtement hydrophobe 7 comprend un polysiloxane. Le revêtement hydrophobe 7 peut être réalisé en polysiloxane. Le polysiloxane est pourvu d'un radical méthyl et d'un radical phényl, préférablement un polyméthylphénylsiloxane, notamment un SILBIONE® 76405 fourni par ELKEM ou un polysiloxane pourvu d'un radical méthyl, préférablement est un polyméthylsiloxane, notamment un SILRES® HK46 fourni par WACKER. Le polysiloxane est appliqué sur la surface supérieure du fond 3. L'application peut être effectuée par pulvérisation, notamment au pistolet pneumatique ou par tampographie. Ensuite un séchage est effectué, notamment à l'air. La température peut être inférieure à 300°C. La durée peut être comprise entre 5 minutes et 5 heures. Le séchage peut être effectué par exposition du polysiloxane à une lumière infrarouge.

Le revêtement hydrophobe 7 présente une épaisseur comprise entre 0,2 et 250 $\mu$m. Le revêtement hydrophobe 7 peut présenter une première partie d'épaisseur comprise entre 0,2 et 5 $\mu$m et une deuxième partie d'épaisseur comprise entre 20 et 100 $\mu$m. En dessous de 0,2 $\mu$m, le revêtement hydrophobe 7 est difficile à observer et peut être présent. Le revêtement hydrophobe 7 présente un angle de contact avec l'eau supérieur ou égal à 60°. Le revêtement hydrophobe 7 est apte au contact alimentaire.

Le revêtement hydrophobe 7 peut être teinté, notamment de la même couleur que le contenant. Pour un contenant en verre blanc - transparent -, le revêtement hydrophobe 7 est également transparent ou au moins translucide.

Le contenant 1 revêtu est gravé. La gravure est ménagée dans la zone du revêtement hydrophobe. La gravure traverse le revêtement hydrophobe, notamment lorsque le revêtement hydrophobe est d'épaisseur inférieure à 30 $\mu$m. La gravure atteint la masse du matériau du corps, en général du verre ou du grès. La gravure est effectuée selon des motifs prédéterminés pour obtenir une répartition régulière des sites de nucléation. La gravure est effectuée par un faisceau laser, notamment en un ou plusieurs passages.

La gravure peut pénétrer dans le verre du fond 3. La gravure peut être ménagée dans le verre du fond 3 hors de la zone du revêtement hydrophobe. Des évidements hors de la zone du revêtement hydrophobe peuvent ainsi être formés.

La gravure forme des concavités ou évidements 8 en forme de points ou de rainures. La profondeur des évidements 8 peut être comprise entre 20 et 30 $\mu$m. La largeur des évidements 8 peut être comprise entre 50 et 350 $\mu$m. La distance minimale entre deux évidements 8 peut être comprise entre 150 et 550 $\mu$m.

Le faisceau laser peut balayer la zone à graver à une vitesse comprise entre 3 et 8 m/s. La fréquence du faisceau laser peut être comprise entre 1 et 20 kHz, préférablement entre 5 et 15 kHz. La puissance utile du faisceau laser peut être comprise entre 20 et 150 W, préférablement entre 60 et 120 W. Le laser peut être du type $CO_2$. Le laser peut être de longueur d'onde comprise entre 300 et 500 nm ou entre 10 et 11 $\mu$m. Le temps de marquage peut être compris entre 0,1 ms et 3 s, préférablement entre 0,5 et 1 s.

Le contenant 1 peut être revêtu et gravé à la volée sur une chaîne de production, en se passant de stockage intermédiaire. On peut prévoir un poste de dépôt de la couche formant le revêtement hydrophobe 7, manuel ou automatisé, un sécheur continu, un four continu de polymérisation et un laser de gravure disposé dans une zone de refroidissement en aval du four continu. Ainsi la gravure est effectuée en temps masqué. En d'autres termes, la gravure peut être effectuée sur des contenants encore à température supérieure à la température ambiante.

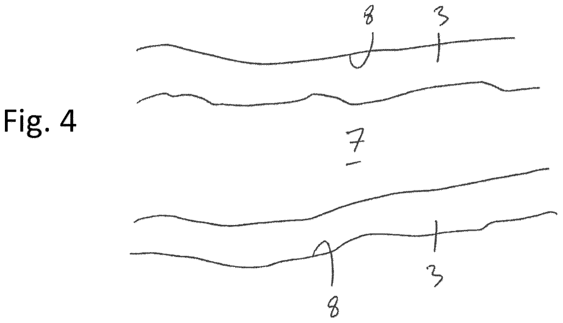

Sur la figure 4, un agrandissement d'un fond de verre en vue de dessus a été représenté. Le grossissement est de l'ordre de 100. Les évidements 8 forment des sites de nucléation à l'intérieur du récipient, ici sur la surface intérieure du fond 3. Les sites de nucléation favorisent la formation de bulles au contact d'une boisson carbonatée et/ou azotée. La géométrie du revêtement hydrophobe 7, hors des évidements 8, est conservée.

Sur un verre ainsi traité, le bullage de la bière à l'état sec et le bullage de la bière à l'état chaud et humide sont quasi identiques. L'invention s'applique en particulier aux récipients en verre sodo-calcique ou en cristallin, notamment en cristallin sans apport volontaire de Pb. Un tel cristallin présente, en général, une teneur en Pb inférieure à 0,5% en masse, préférablement inférieure à 10 ppm.

Sur la figure 5 ont été comparés un verre à bière ordinaire à gauche et un verre selon l'invention à droite. Le verre à bière ordinaire présente une surface intérieure en contact avec la bière, constituée de verre. Les condidtions de température, d'humidité et de durée de séjour de la bière dans le verre sont identiques. Au bout de quelques minutes, le verre à bière ordinaire ne contient plus de mousse et le bullage est très faible ; et le verre selon l'invention contient une mousse sur plusieurs centimètres de hauteur et un bullage dense.

L'invention ne se limite pas aux exemples de procédés et de récipients décrits ci-avant, seulement à titre d'exemple, mais elle englobe toutes les variantes que pourra envisager l'homme de l'art dans le cadre des revendications ci-après.

## Revendications

1. Contenant (1) à boisson gazeuse, notamment verre, comprenant une paroi étanche réalisée en au moins un matériau structurel définissant une surface interne destinée à recevoir de la boisson, ladite surface interne comprenant une région munie d'un revêtement hydrophobe (7) discontinu comprenant un siloxane polymérisé, une pluralité d'évidements (8) étant ménagés dans ledit revêtement hydrophobe (7), lesdits évidements (8) étant non débouchants de la paroi étanche.

2. Contenant à boisson gazeuse selon la revendication 1, dans lequel le revêtement (7) hydrophobe présente une épaisseur variant de plus de 0 à 250 $\mu$m d'une zone à une autre zone dudit revêtement.

3. Contenant à boisson gazeuse selon l'une des revendications précédentes, dans lequel le revêtement hydrophobe (7) présente au moins une première partie d'épaisseur comprise entre 20 et 100 $\mu$m, et au moins une deuxième partie d'épaisseur comprise entre 0,2 et 5 $\mu$m.

4. Contenant à boisson gazeuse selon l'une des revendications précédentes, dans lequel le polysiloxane est pourvu d'un radical méthyl, préférablement est un polyméthylsiloxane, notamment un SILRES® HK46, ou d'un radical méthyl et d'un radical phényl, préférablement est un polyméthylphénylsiloxane, notamment un SILBIONE®76405.

5. Contenant à boisson gazeuse selon l'une des revendications précédentes, dans lequel le revêtement hydrophobe (7) présente un angle de contact avec l'eau supérieur ou égal à 60°, préférablement supérieur ou égal à 100°.

6. Contenant à boisson gazeuse selon l'une des revendications précédentes, dans lequel le revêtement hydrophobe (7) est apte au contact alimentaire et le revêtement hydrophobe (7) présente, hors des évidements (9), une surface libre sensiblement plane.

7. Contenant à boisson gazeuse selon l'une des revendications précédentes, dans lequel les évidements présentent une distance inter évidements comprise entre 150 et 550 $\mu$m et une largeur comprise entre 50 et 350 $\mu$m et lesdits évidements (9) sont des trous disposés selon un motif régulier.

8. Procédé pour créer des sites de nucléation à l'intérieur d'un récipient pour boisson et favoriser la formation de bulles au contact d'une boisson gazeuse, dans lequel une région est munie d'au moins un revêtement hydrophobe (7) discontinu comprenant un siloxane polymérisé, le récipient comprenant une paroi étanche réalisé en au moins un matériau structurel définissant une surface interne destinée à recevoir de la boisson, ladite surface interne comprenant ladite région, et des évidements (8) sont ménagés dans ledit revêtement hydrophobe (7), lesdits évidements étant non débouchants de la paroi étanche.

9. Procédé selon la revendication 8, dans lequel ledit au moins un revêtement hydrophobe est déposé, notamment par tampographie, puis traité thermiquement.

**10.** Procédé selon la revendication 8 ou 9, dans lequel lesdits évidements sont ménagés par des tirs laser de fréquence comprise entre 1 et 20 kHz, préférablement entre 5 et 15 kHz, de puissance comprise entre 20 et 150 W, préférablement entre 60 et 120 W, de durée comprise entre 0,1 et 3 s, préférablement entre 0,5 et 1 s.

**Patentansprüche**

**1.** Behälter (1) für kohlensäurehaltige Getränke, insbesondere Glas, umfassend eine dichte Wand, die aus mindestens einem Strukturmaterial hergestellt ist und eine Innenoberfläche definiert, die dazu bestimmt ist, das Getränk aufzunehmen, wobei die Innenoberfläche einen Bereich umfasst, der mit einer diskontinuierlichen hydrophoben Beschichtung (7) versehen ist, die ein polymerisiertes Siloxan umfasst, wobei in der hydrophoben Beschichtung (7) eine Vielzahl von Vertiefungen (8) ausgebildet sind, wobei die Vertiefungen (8) nicht in die dichte Wand münden.

**2.** Behälter für kohlensäurehaltige Getränke nach Anspruch 1, wobei die hydrophobe Beschichtung (7) eine Dicke aufweist, die von einer Zone zu einer anderen Zone der Beschichtung zwischen mehr als 0 bis 250 μm variiert.

**3.** Behälter für kohlensäurehaltige Getränke nach einem der vorhergehenden Ansprüche, wobei die hydrophobe Beschichtung (7) mindestens einen ersten Teil der Dicke zwischen 20 und 100 μm und mindestens einen zweiten Teil der Dicke zwischen 0,2 und 5 μm aufweist.

**4.** Behälter für kohlensäurehaltige Getränke nach einem der vorhergehenden Ansprüche, wobei das Polysiloxan mit einem Methylrest, vorzugsweise ein Polymethylsiloxan ist, insbesondere ein SILRES® HK46, oder mit einem Methylrest und einem Phenylrest versehen ist, vorzugsweise ein Polymethylphenylsiloxan ist, insbesondere ein SILBIONE®76405.

**5.** Behälter für kohlensäurehaltige Getränke nach einem der vorhergehenden Ansprüche, wobei die hydrophobe Beschichtung (7) einen Kontaktwinkel mit dem Wasser von größer gleich 60°, vorzugsweise größer gleich 100°, aufweist.

**6.** Behälter für kohlensäurehaltige Getränke nach einem der vorhergehenden Ansprüche, wobei die hydrophobe Beschichtung (7) für den Kontakt mit Lebensmitteln geeignet ist und die hydrophobe Beschichtung (7) außerhalb der Vertiefungen (9) eine im Wesentlichen ebene freie Oberfläche aufweist.

**7.** Behälter für kohlensäurehaltige Getränke nach einem der vorhergehenden Ansprüche, wobei die Vertiefungen einen Abstand zwischen den Vertiefungen zwischen 150 und 550 μm und eine Breite zwischen 50 und 350 μm aufweisen und die Vertiefungen (9) Löcher sind, die einem regelmäßigen Muster entsprechend angeordnet sind.

**8.** Verfahren zum Erzeugen von Keimbildungsstellen im Inneren eines Gefäßes für Getränke und zum Fördern der Blasenbildung bei Kontakt mit einem kohlensäurehaltigen Getränk, wobei ein Bereich mit mindestens einer diskontinuierlichen hydrophoben Beschichtung (7) versehen ist, die ein polymerisiertes Siloxan umfasst, wobei das Gefäß eine dichte Wand umfasst, die aus mindestens einem Strukturmaterial hergestellt ist und eine Innenoberfläche definiert, die dazu bestimmt ist, das Getränk aufzunehmen, wobei die Innenoberfläche den Bereich umfasst, und in der hydrophoben Beschichtung (7) die Vertiefungen (8) ausgebildet sind, wobei die Vertiefungen nicht in die dichte Wand münden.

**9.** Verfahren nach Anspruch 8, wobei die mindestens eine hydrophobe Beschichtung aufgebracht wird, insbesondere durch Tampondruck, und dann wärmebehandelt wird.

**10.** Verfahren nach Anspruch 8 oder 9, wobei die Vertiefungen durch Laserschüsse mit einer Frequenz zwischen 1 und 20 kHz, vorzugsweise zwischen 5 und 15 kHz, einer Leistung zwischen 20 und 150 W, vorzugsweise zwischen 60 und 120 W, und einer Dauer zwischen 0,1 und 3 s, vorzugsweise zwischen 0,5 und 1 s, ausgebildet werden.

**Claims**

**1.** Fizzy beverage container (1), in particular a glass, comprising an impervious wall made of at least one structural material defining an internal surface intended to receive the beverage, said internal surface comprising an area provided with a discontinuous hydrophobic coating (7) comprising a polymerised siloxane, a plurality of recesses (8) being made in said hydrophobic coating (7), said recesses (8) not passing through the impervious wall.

2. Fizzy beverage container according to claim 1, wherein the hydrophobic coating (7) has a thickness that varies from more than 0 to 250 $\mu$m from one zone to another zone of said coating.

3. Fizzy beverage container according to one of the preceding claims, wherein the hydrophobic coating (7) has at least one first part with a thickness comprised between 20 and 100 $\mu$m and at least one second part with a thickness comprised between 0.2 and 5 $\mu$m.

4. Fizzy beverage container according to one of the preceding claims, wherein the polysiloxane is provided with a methyl radical, and is preferably a polymethylsiloxane, in particular a SILRES® HK46, or is provided with a methyl radical and a phenyl radical, and is preferably a polymethylphenylsiloxane, in particular a SILBIONE®76405.

5. Fizzy beverage container according to one of the preceding claims, wherein the hydrophobic coating (7) has a water contact angle of greater than or equal to 60°, preferably greater than or equal to 100°.

6. Fizzy beverage container according to one of the preceding claims, wherein the hydrophobic coating (7) is suitable for contact with foods and the hydrophobic coating (7) has, outside of the recesses (9), a substantially planar free surface.

7. Fizzy beverage container according to one of the preceding claims, wherein the recesses have an inter-recess distance comprised between 150 and 550 $\mu$m and a width comprised between 50 and 350 $\mu$m, and said recesses (9) are holes disposed in a regular pattern.

8. Method for creating nucleation sites inside a beverage vessel and for promoting the formation of bubbles upon contact with a fizzy beverage, wherein an area is provided with at least one discontinuous hydrophobic coating (7) comprising a polymerised siloxane, the vessel comprising an impervious wall made of at least one structural material defining an internal surface intended to receive a beverage, said internal surface comprising said area, and recesses (8) are made in said hydrophobic coating (7), said recesses not passing through the impervious wall.

9. Method according to claim 8, wherein said at least one hydrophobic coating is deposited, in particular by pad printing, then undergoes heat treatment.

10. Method according to claim 8 or 9, wherein said recesses are made by laser shots having a frequency comprised between 1 and 20 kHz, preferably between 5 and 15 kHz, a power comprised between 20 and 150 W, preferably between 60 and 120 W, and a duration comprised between 0.1 and 3 s, preferably between 0.5 and 1 s.

**Fig.1**

**Fig.2**

## Fig. 5

## Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0703743 A
- FR 2531891
- WO 2010048488 A
- FR 3008295
- FR 1753464

**Littérature non-brevet citée dans la description**

- **LIGER-BELAIR, G.** The physics behind the fizz in champagne and sparkling wines. *European Physical Journal: Spécial Topics,* 2012, vol. 201, 1-88
- **LIGER-BELAIR, G.** La physique des bulles de champagne. *Annales de Physique (Paris),* 2002, vol. 27 (4), 1-106
- **LIGER-BELAIR, G. ; CONREUX, A. ; VILLAUME, S. ; CILINDRE, C.** Monitoring the losses of dissolved carbon dioxide from laser-etched champagne glasses. *Food Research International,* 2013, vol. 54, 516-522
- **LIGER-BELAIR, G. ; VOISIN, C. ; JEANDET, P.** Modeling non-classical heterogeneous bubble nucléation from cellulose fibers: Application to bubbling in carbonated beverages. *Journal of Physical Chemistry B,* 2005, vol. 109, 14573-14580
- **LIGER-BELAIR, G ; PARMENTIER, M. ; JEANDET, P.** Modeling the kinetics of bubble nucléation in champagne and carbonated beverages. *Journal of Physical Chemistry B,* 2006, vol. 110, 21145-21151
- **LIGER-BELAIR, G.** How many bubbles in your glass of bubbly?. *Journal of Physical Chemistry B,* 2014, vol. 118, 3156-3163
- **LIGER-BELAIR, G ; BOURGET, M. ; VILLAUME, S. ; JEANDET, P ; PRON, H. ; POLIDORI, G.** On the losses of dissolved CO2 during champagne serving. *Journal of Agricultural and Food Chemistry,* 2010, vol. 58, 8768-8775